# EUROPEAN PATENT SPECIFICATION

(11) **EP 0 618 255 B1**
(45) Date of publication and mention of the grant of the patent: **03.06.1998**
(21) Application number: 94104260.8
(22) Date of filing: 18.03.1994
(51) Int. Cl.: C08K 3/26, C08K 5/06, C08L 23/10

(54) **Flame-resistant propylene polymer compositions containing bismuth carbonate and a brominated aromatic compound**
Flammwidrige Propylenpolymerzusammensetzungen welche Wismutcarbonat und eine bromierte aromatische Verbindung enthalten
Compositions polymères de propylène résistants aux flames contenant du carbonate de bismuth et d'un composé aromatique bromé

(30) Priority: 31.03.1993 US 41432
(43) Date of publication of application: 05.10.1994
(73) Proprietor: MONTELL NORTH AMERICA INC., Wilmington Delaware 19850-5439 (US)
(72) Inventor: Bolthouse, Carole L., Bellevue, Michigan 49021 (US); Bertelli, Guido, I-44100 Ferrara (IT); Locatelli, Renato, I-44100 Ferrara (IT)
(74) Representative: Luderschmidt, Schüler & Partner GbR

(56) References cited:
- FR-A- 2 407 238
- US-A- 5 116 898

## Description

This application relates to flame retardant polyolefin compositions containing a flame retardant admixture. In particular, propylene polymer compositions containing a flame retardant admixture of bismuth carbonate and a brominated aromatic compound.

Various methods to provide polyolefin materials with flame-resistance are known in the art. For example, US-A-4,010,139 discloses a self-extinguishing polyolefinic composition containing (a) a polyolefin selected from the group consisting of homopolymers and copolymer of ethylene, alpha-olefins and styrene; and (b) a mixture of: (1) a bismuth compound selected from the group consisting of basic bismuth carbonate and triphenyl-bismuthine; and (2) a partially halogenated compound which is capable of breaking down in the presence of heat to form the corresponding halogen halide.

US-B1-4,710,528 (Reexamined US-A-4,710,528) describes flame resistant thermoplastic polymeric compositions comprising (A) from 60 to 98.9% of a thermoplastic polymer; (B) from 0.1 to 10% of an antimony and/or bismuth compound; (C) 0.05 to 1% of a promoter of free radicals; and (D) from 1 to 35% of a melamine bromohydrate.

US-A-4,203,882 discloses impact resistant polymer compositions having flame-resistance properties comprising (1) a blend of a thermoplastic block propylene-ethylene copolymer and an elastomeric ethylene-propylene copolymer; (2) 0.5 to 5% of basic bismuth carbonate (BiO)₂CO₃; (3) 0.3 to 1.3% of a triazine compound; (4) 2 to 10% of a chlorinated paraffin wax; and (5) 0.5 to 10% of a bromine containing organic compound.

US-A-5,079,283 discloses a flame-retardant polypropylene composition comprising a modified polypropylene-based polymer, antimony oxide or sodium antimonate and a halogenated organic compound or a phosphorous containing compound.

US-A-5,166,235 discloses concentrates of a flame retardant additives, in the form of nonextruded particles, of which each one comprising (A) a matrix of a nonextruded, as polymerized particle of a polymer or copolymer of olefins having porosity greater than or equal to 15%, expressed as a percent of the void volume on the total volume of the particle, (B) the product of reaction between bismuth or antimony trichloride or tribromide, or their mixtures, and one or more amines; wherein said product (B) is made "in situ" and deposited on the surface of the matrix and inside the pores thereof.

SU-A-1052518 describes a flame-resistant polypropylene composition containing 100 parts of polypropylene, 3-8 parts of basic bismuth carbonate, 2-4 parts of a halogen containing compound, such as decabromodiphenyl oxide, hexabromobenzene, and 0.2 to 0.8 parts of a phenolic antioxidant.

It has been found that propylene polymer compositions can reach excellent levels of flame resistance when blended with an admixture of bismuth carbonate and a brominated aromatic compound.

Accordingly, this invention provides flame-resistant propylene polymer compositions as defined in claim 1.

All parts and percentages used in this application are by weight unless otherwise specified. Ambient or room temperature is approximately 25°C.

The propylene polymer material used in the present invention is (i) a propylene homopolymer having an isotactic index greater than 80, preferably from 85 to 98, (ii) a random copolymer of propylene and an olefin selected from ethylene or C₄₋₁₀ alpha-olefins, provided that, when the olefin is ethylene, the maximum polymerized ethylene content is about 10%, preferably 4-9%, and when the olefin is a C₄₋₁₀ alpha-olefin, the maximum polymerized content thereof is about 20%, preferably about 16%; (iii) a random terpolymer of propylene with two alpha-olefins selected from the group consisting of ethylene and C₄₋₈ alpha-olefin, provided that the maximum polymerized C₄₋₈ alpha-olefin content is about 20%, preferably about 16%, and when ethylene is one of said alpha-olefins, the maximum polymerized ethylene content is about 5%, preferably about 4%, (iv) a homopolymer of (i) or a random copolymer of (ii) impact modified with from about 5 to 70% of an ethylene-propylene copolymer rubber, or an ethylene-propylene-non-conjugated diene monomer rubber having a diene content of about 2-8%, and an ethylene content of from 7 to 70%; or (v) mixtures thereof.

The C₄₋₁₀ alpha-olefins include linear or branched C₄₋₁₀ alpha-olefins such as 1-butene, 1-pentene, 4-methyl-1-pentene, 3-methyl-1-butene, 1-hexene, 3,4-dimethyl-1-butene, 1-heptene, 3-methyl-1-hexene, 1-octene, and the like.

Preferably, the polymer material is polypropylene, an ethylene-propylene copolymer rubber impact modified polypropylene or mixture thereof.

The bismuth carbonates used in the present invention are (BiO)₂CO₃ and Bi₂O₃CO₂1/2H₂O. Preferred is Bi₂O₃CO₂1/2H₂O. The brominated aromatic compound which is used in the compositions of this invention include decabromodiphenyl oxide, octabromodiphenyl oxide and pentabromodiphenyl oxide. The preferred brominated aromatic compound is decabromodiphenyl oxide.

The talc, when present in the composition of the present invention, can be any convention talc.

Preferably, the propylene polymer material is present in an amount of from 35 to 45%, the bismuth carbonate is present in an amount of from 7 to 12%, the brominated aromatic compound is present in an amount of from 20 to 30%, and the talc is present in an amount of from 20 to 25%.

In addition to the above main ingredients, the composition of the invention contains from 0.10 to 5% of additives such as antioxidants, ultraviolet absorbers, thermal stabilizers, flow agents, antistatic agents, mold release agents, inorganic fillers and/or pigments.

The compositions of the present invention can be prepared according to conventional methods, for example by mixing the propylene polymer material, bismuth carbonate, brominated aromatic compound and the talc, as well as known additives in a blender such as a Henschel or Banbury mixer, to uniformly disperse the ingredients, at a temperature equal or exceeding the polymer softening temperature, then extruding the mixture and pelletizing.

The present invention will be illustrated in greater detail with reference to the examples of the invention set forth below. The test samples and physical properties of the following working examples and comparative examples were prepared and measured according to the following methods:

| | |
|---|---|
| Melt Flow, g/10 min. | ASTM D-1238 |
| Specific Gravity, g/cm³ | ASTM D-729A |
| Flexural Modulus | ASTM D-790 |
| Tensile Strength | ASTM D-638 |
| Tensile Elongation, % | ASTM D-638 |
| HDT, 0,455 MPa (66 psi),°C | ASTM D-648 |
| 1,82 MPa (264 psi),°C | |
| Gardner Falling Dart Impact | ASTM D-3029 |
| Notched Izod | ASTM D-256A |
| Tool Shrink | ASTM D-955 |
| parallel | |
| perpendicular | |

To determine the flame retardancy properties of the compositions, test samples (3,18 mm; 0.125 in.) are molded at 200°C - 240°C on a 75 ton Van Dorn type molding press.

The level of flame-resistance of the samples is determined both by measuring the oxygen index according to the ASTM D-2863, and by applying UL 94 standards (issued by Underwriter Laboratories-USA).

The oxygen index, (LOI), measure represents the minimum concentration of oxygen (expressed in % vol) in an oxygen-nitrogen mixture which allows the sample of the material being examined, after having been ignited, to burn continuously for 3 minutes and/or for 50 mm of the length of the sample.

The UL 94 test is conducted on samples which are positioned vertically and have the thickness indicated in the test method. From the moment that the flame source is removed, observed is the time it takes for the sample to extinguish and whether the material drips or not during combustion. This test classifies the materials (1) V-0 when the average extinguishing time of the flame is less than or equal to 5 seconds, (2) V-1 when the average extinguishing time of the flame is less than or equal to 25 seconds, and (3) V-2 when it behaves like V-1, and also drips droplets of lighted melted polymer capable of igniting cotton located 305 mm under it.

The compositions of the present invention are prepared by mixing propylene polymer material, bismuth carbonate, brominated aromatic compound, talc, and additives in a Banbury mixer, until the ingredients are uniformly disperse, at a temperature equal or exceeding the polymer softening temperature, then the mixture is extruded and pelletized. The pellets are molded, cooled and removed for testing.

The ingredients used in the preparation of the compositions of this invention illustrated in the examples that follow are:
Polymer A - an ethylene-propylene copolymer rubber impact modified polypropylene, 30.7% EPR content, 21.5% ethylene content and MFR of 9 dg/min.;
Polymer B - an ethylene-propylene copolymer rubber impact modified polypropylene, 13.4% EPR, 8.5% ethylene content and MFR of 35 dg/min.;
Polymer C - an ethylene-propylene copolymer rubber impact modified polypropylene, 13.7% EPR, 9% ethylene content and MFR of 4 dg/min.;
Polymer D - a propylene homopolymer, MFR of 22 dg/min.;
Polymer E - an ethylene-propylene copolymer rubber impact modified ethylene-propylene random copolymer, 33% EPR content, 22% ethylene content and MFR of 10.5 dg/min..
Cantal 45/90 10 micron talc from Canada Talc Industries Ltd.
Colonial 3300 N110 50% carbon black masterbatched in low
   density polyethylene from Colonial Rubber Works Inc.
Epon 1002 Epoxy bisphenol A epoxide from Shell Chemical
   Company.
Irganox 1010 tetrakis[methylene(3,5-di-tert-butyl-4-hydroxyhydrocinnamate)]methane stabilizer from Ciba-Giegy.
Irganox B-225 50:50 blend of Irganox 1010 and Irgafos 168,
   tris(2,4-di-tert-butylphenyl)phosphite, stabilizer from
   Ciba-Giegy.
DSTDP a distearylthiodipropionate.

### Examples 1 and 2

The ingredients of the compositions of present invention of each example are illustrated in Table 1 are prepared according to the general procedure described above.

The physical properties are set forth in Table 1.

**Table 1**

| | Examples | |
|---|---|---|
| Ingredients | 1 | 2 |
| | | |
| Polymer A | 41.00 | 37.95 |
| Bismuth subcarbonate | 7.25 | 8.40 |
| Decabromodiphenyl | 23.00 | 25.00 |
| Cantal 45/80 Talc | 22.60 | 23.00 |
| Irganox 1010 | 0.10 | 0.10 |
| Irganox B-225 | 0.30 | 0.30 |
| Calcium Stearate | 0.10 | 0.10 |
| Epon 1002 Epoxy | 0.75 | 0.75 |
| DSTDP | 0.40 | 0.40 |
| Colonial 3300 Black | 4.00 | 4.00 |
| | | |

| Properties | | |
|---|---|---|
| | | |
| Specific Gravity, g/cm³ | 1.47 | 1.48 |
| Melt Flow, g/10 min | 4.8 | 4.5 |
| Flexural Modulus, (psi) MPa | (240000) 1655 | (241000) 1661 |
| Tensile Strength, (psi) MPa | (2161) 14,9 | (2203) 15,2 |
| Tensile Elongation, % | 9.7 | 14.3 |
| HDT, 0,455 MPa (66 psi),°C | 97 | 99 |
| 1,82 MPa (264 psi),°C | 51 | 53 |
| Gardner Falling Dart Impact, (in-lb.) J | (120) 13,5 | 120 13,5 |
| Notched Izod, (ft-lb/in) J/m | (0.91) 48 | (0.79) 43 |
| LOI, % | 27 | 30 |
| UL 94, Vertical Burn | V-0 | V-0 |

As demonstrated by the results in Table 1, the compositions of Examples 1 and 2 obtained UL 94 ratings of V-0.

### Examples 3-6

The ingredients of the compositions of each example illustrated in Table 2 are prepared according to the general procedure described above 2.

The properties are set forth in Table 2.

**Table 2**

| | Examples | | | |
|---|---|---|---|---|
| Ingredients | 3 | 4 | 5 | 6 |
| | | | | |
| Polymer B | 19.27 | -- | -- | -- |
| Polymer C | 19.28 | -- | 8.55 | -- |
| Polymer D | -- | 23.55 | -- | 23.35 |
| Polymer E | -- | 15.00 | 30.00 | 16.00 |
| Bismuth subcarbonate | 7.80 | 7.80 | 7.80 | 7.80 |
| Decabromodiphenyl | 25.00 | 25.00 | 25.00 | 25.00 |
| Cantal 45/80 Talc | 23.00 | 23.00 | 23.00 | 23.00 |
| Irganox 1010 | 0.10 | 0.10 | 0.10 | 0.10 |
| Irganox B-225 | 0.30 | 0.30 | 0.30 | 0.30 |
| Calcium Stearate | 0.10 | 0.10 | 0.10 | 0.10 |
| Epon 1002 Epoxy | 0.75 | 0.75 | 0.75 | 0.75 |
| DSTDP | 0.40 | 0.40 | 0.40 | 0.40 |
| Colonial 3300 Black | 4.00 | 4.00 | 4.00 | 4.00 |
| Mark 645A* | -- | -- | -- | .20 |
| | | | | |

| Properties | | | | |
|---|---|---|---|---|
| | | | | |
| Specific Gravity, g/cm³ | 1.52 | 1.52 | 1.52 | 1.51 |
| Melt Flow, g/10 min | 3.1 | 9.5 | 6.7 | 8.8 |
| LOI, % | 28 | 29 | 29 | 29 |
| UL 94, Vertical Burn | V-0 | V-0 | V-0 | V-0 |
| | | | | |

| | | | | |
|---|---|---|---|---|
| * A dibutyl maleate blend from Argus. | | | | |

It can be seen from the results in Table 2, that the compositions of the present invention, Examples 3-6 obtained UL 94 ratings of V-0.

The compositions of the present invention are useful for the production of injection molded articles such as battery cases, electrical boxes or housings and connectors.

## Claims

1. A propylene polymer composition having improved flame resistance consisting essentially of:
(A) 30 to 60% of a propylene polymer material selected from the group consisting of (i) a propylene homopolymer having an isotactic index greater than 80, (ii) a random copolymer of propylene and an olefin selected from ethylene or C₄₋₁₀ alpha-olefins, (iii) a random terpolymer with two alpha-olefins selected from the group consisting of ethylene and C₄₋₈ alpha-olefin, (iv) a homopolymer of (i) or a random copolymer of (ii) impact modified with from 5 to 70% of an ethylene-propylene copolymer rubber, or an ethylene-propylene-non-conjugated diene monomer rubber having a diene content of 2-8%, and an ethylene content of from 7 to 70%; or (v) mixtures thereof;
(B) 5 to 15% of a bismuth carbonate selected from the group consisting of (BiO)₂CO₃ and Bi₂O₃·CO₂·1/2H₂O;
(C) 15 to 40% of a brominated aromatic compound selected from the group consisting of decabromodiphenyl oxide, octabromodiphenyl oxide and pentabromodiphenyl oxide; and optionally,
(D) 20 to 30% of talc.

2. The composition of claim 1, wherein said bismuth carbonate is material is Bi₂O₃·CO₂·1/2H₂O.

3. The composition of claim 2, wherein said talc is present in an amount of from 20 to 25%.

4. The composition of claim 3, wherein said bismuth carbonate is present in an amount of from 7 to 12%.

5. The composition of claim 4, wherein said brominated aromatic compound is decabromodiphenyl oxide.

6. The composition of claim 5, wherein said decabromodiphenyl oxide is present in an amount of from 20 to 30%.

7. The composition of claim 1, wherein (A) is from 35 to 45%, (B) is from 7 to 12%, (C) is from 20 to 30% and (D) is from 20 to 25%.

8. The composition of claim 7, wherein (A) is an ethylene-propylene rubber copolymer impact modified polypropylene having an EPR content of 30.7%, an ethylene content of 21.5% and MFR of 9 dg/min.

9. The composition of claim 8, wherein (B) is Bi₂O₃CO₂1/2H₂O.

10. The composition of claim 9, wherein (C) is decabromo-diphenyl oxide.

## Patentansprüche

1. Eine Propylenpolymerzusammensetzung mit verbesserter Flammbeständigkeit, im wesentlichen bestehend aus:
(A) 30-60% eines Propylenpolymermaterials, ausgewählt aus der Gruppe, die besteht aus (i) einem Propylenhomopolymeren mit einem isotaktischen Index von mehr als 80, (ii) einem statistischen Copolymeren von Propylen und einem aus Ethylen oder C₄- bis C₁₀-alpha-Olefinen ausgewählten Olefin, (iii) einem statistischen Terpolymeren mit zwei alpha-Olefinen, ausgewählt aus der Gruppe, die besteht aus Ethylen und einem C₄- bis C₈-alpha-Olefin, (iv) einem Homopolymeren von (i) oder einem statistischen Copolymeren von (ii) mit 5-70% eines Ethylen-Propylen-Copolymerkautschuks oder eines Kautschuks aus Ethylen, Propylen und einem nichtkonjugierten Dienmonomeren mit einem Diengehalt von 2-8% und einem Ethylengehalt von 2-70% hinsichtlich seiner Schlagzähigkeit modifiziert; oder (v) deren Gemischen;
(B) 5-15% eines Wismutcarbonats, ausgewählt aus der Gruppe, die besteht aus (BiO)₂CO₃ und Bi₂O₃. CO₂.½H₂O;
(C) 15-40% einer bromierten aromatischen Verbindung, ausgewählt aus der Gruppe, die besteht aus Decabromdiphenyloxid, Octabromdiphenyloxid und Pentabromdiphenyloxid, und wahlweise
(D) 20 bis 30% Talkum.

2. Zusammensetzung gemäß Anspruch 1, bei der das Wismutcarbonat Bi₂O₃.CO₂½H₂O ist.

3. Zusammensetzung gemäß Anspruch 2, bei der das Talkum in einer Menge von 20-25% vorliegt.

4. Zusammensetzung gemäß Anspruch 3, bei der das Wismutcarbonat in einer Menge von 7 bis 12% vorliegt.

5. Zusammensetzung gemäß Anspruch 4, bei der die broierte aromatische Verbindung Decabromdiphenyloxid ist.

6. Zusammensetzung gemäß Anspruch 5, bei der das Decabromdiphenyloxid in einer Menge von 20 bis 30% vorliegt.

7. Zusammensetzung gemäß Anspruch 1, bei der (A) 35 bis 45%, (B) 7 bis 12%, (C) 20 bis 30% und (D) 20 bis 25% betragen.

8. Zusammensetzung gemäß Anspruch 7, bei der (A) ein mit einem Ethylen-Propylen-Copolymerkautschuk hinsichtlich der Schlagzähigkeit modifiziertes Polypropylen mit einem EPR-Gehalt von 30,7%, einem Ethylengehalt von 21,5% und einem MFR-Wert von 9 dg/Min. ist.

9. Zusammensetzung gemäß Anspruch 8, bei der (B) Bi₂O₃CO₂.½H₂O ist.

10. Zusammensetzung gemäß Anspruch 9, bei der (C) Decabromdiphenyloxid ist.

## Revendications

1. Composition de polymère de propylène manifestant une résistance améliorée à la propagation des flammes, constituée essentiellement par:
(A) à concurrence de 30 à 60%, une matière de polymère de propylène choisie parmi le groupe constitué par (i) un homopolymère de propylène dont l'indice isotactique est supérieur à 80, (ii) un copolymère statistique de propylène et d'une oléfine choisie parmi l'éthylène ou des alpha-oléfines en C₄-C₁₀, (iii) un terpolymère statistique avec deux alpha-oléfines choisies parmi le groupe constitué par l'éthylène et une alpha-oléfine en C₄-C₈, (iv) un homopolymère de (i) ou un copolymère statistique de (ii) modifié à résistance élevée aux chocs, avec, à concurrence de 5 à 70%, un caoutchouc de copolymère d'éthylène-propylène ou un caoutchouc d'éthylène-propylène-monomère diénique non conjugué dont la teneur en diène représente de 2 à 8% et dont la teneur en éthylène représente de 7 à 70%, ou (v) leurs mélanges;
(B) à concurrence de 5 à 15%, un carbonate de bismuth choisi parmi le groupe constitué par (BiO)₂CO₃ et Bi₂O₃.CO₂.1/2H₂O;
(C) à concurrence de 15 à 40%, un composé aromatique bromé choisi parmi le groupe constitué par l'oxyde de décabromodiphényle, l'oxyde d'octabromodiphényle et l'oxyde de pentabromodiphényle; et le cas échéant
(D) à concurrence de 20 à 30%, du talc.

2. Composition selon la revendication 1, dans laquelle ladite matière de carbonate de bismuth est Bi₂O₃.CO₂.1/2H₂O.

3. Composition selon la revendication 2, dans laquelle ledit talc est présent en une quantité de 20 à 25%.

4. Composition selon la revendication 3, dans laquelle ledit carbonate de bismuth est présent en une quantité de 7 à 12%.

5. Composition selon la revendication 4, dans laquelle ledit composé aromatique bromé est l'oxyde de décabromodiphényle.

6. Composition selon la revendication 5, dans laquelle ledit oxyde de décabromodiphényle est présent en une quantité de 20 à 30%.

7. Composition selon la revendication 1, dans laquelle (A) représente de 35 à 45%, (B) représente de 7 à 12%, (C) représente de 20 à 30% et (D) représente de 20 à 25%.

8. Composition selon la revendication 7, dans laquelle (A) représente un polypropylène modifié à résistance élevée aux chocs à l'aide d'un copolymère de caoutchouc d'éthylène-propylène, dont la teneur en EPR s'élève à 30,7%, dont la teneur en éthylène s'élève à 21,5% et qui possède une valeur MFR de 9 dg/min.

9. Composition selon la revendicatiom 8, dans laquelle (B) représente Bi₂O₃CO₂.1/2H₂O.

10. Composition selon la revendication 9, dans laquelle (C) représente l'oxyde de décabromodiphényle.
